# EUROPEAN PATENT APPLICATION

(11) **EP 4 711 712 A1**
(43) Date of publication of application: **18.03.2026**
(21) Application number: 24200647.6
(22) Date of filing: 16.09.2024
(51) Int. Cl.: G01C 21/00, G01C 23/00, G06T 7/73, G08G 5/54, G08G 5/55

(54) **FLIGHT HEADING ESTIMATION**

(71) Applicant: Rockwell Collins, Inc., Cedar Rapids, IA 52498 (US)
(72) Inventor: TIANA, Carlo L., Portland, 97215 (US); IOVINO, Serena, 00183 Roma (IT); HO, MaryAnn, Superior, CO 80027 (US)
(74) Representative: Dehns

(57) **Abstract**

An aircraft heading estimation system comprising: one or more sensors arranged on the aircraft to detect features in a viewing region and provide feature signals indicative of the detected features; an image processor storing predetermined image information of one or more expected features, being features that might be expected to be present in the viewing region, the image processor configured to compare the features indicated by the feature signals with the one or more expected features to generate an estimated observed image and to derive an estimated heading for the aircraft based on the estimate observed image; wherein the image processor is further configured to incrementally update the estimated observed image with new feature signals generated by the sensors as their distance to the viewing region changes, and to incrementally updated the estimated heading based on the updated estimate observed image.

## Description

### TECHNICAL FIELD

The present disclosure is concerned with estimating a flight heading for an aircraft, particularly in poor visibility conditions.

### BACKGROUND

For both manual and autonomous flight, when an aircraft is flying in low visibility conditions, the pilot/flight control system requires accurate heading estimation which requires multiple verification and confirmation procedures. Particularly on approach and landing, if visibility is poor, an aircraft may not be able to receive sufficient information from its sensors or from the approach lighting system of an airport to be able to accurately and safely judge the heading and perform a safe approach and landing. An approach lighting system (ALS) typically displays a series of lights or light bars that flash and/or vary in size along the length of the landing area to guide the pilot. The more the pilot/auto-pilot is not able to accurately detect these lights, the greater the risk of a heading error and, subsequently, erroneous landing.

Aircraft typically rely on high resolution sensors to reliably detect objects to assist in approach and landing. Such high resolution sensors, however, are generally not able to penetrate the atmosphere. Other sensors, which have a long range, do not, on the other hand, have high resolution.

There is a need to provide a system to provide increased accuracy heading estimations in low visibility conditions to assist in safe and reliable approach and landing of an aircraft.

### SUMMARY

According to one aspect, there is provided an aircraft heading estimation system comprising: one or more sensors arranged on the aircraft to detect features in a viewing region and provide feature signals indicative of the detected features; an image processor storing predetermined image information of one or more expected features, being features that might be expected to be present in the viewing region, the image processor configured to compare the features indicated by the feature signals with the one or more expected features to generate an estimated observed image and to derive an estimated heading for the aircraft based on the estimate observed image; wherein the image processor is further configured to incrementally update the estimated observed image with new feature signals generated by the sensors as their distance to the viewing region changes, and to incrementally updated the estimated heading based on the updated estimate observed image.

According to another aspect, there is provided a method of estimating an aircraft heading, comprising: detecting, by one or more sensors arranged on an aircraft, features in a viewing region and providing feature signals indicative of the detected features; comparing, in an image processor, the features indicated by the feature signals with one or more expected features, being features that might be expected to be present in the viewing region, to generate an estimated observed image; deriving an estimated heading for the aircraft based on the estimate observed image; and incrementally updating the estimated observed image with new feature signals generated by the sensors as their distance to the viewing region changes, and incrementally updating the estimated heading based on the updated estimate observed image

### BRIEF DESCRIPTION

Examples of the estimation techniques according to this disclosure will now be described with reference to the drawings. It should be noted that these are examples only and that variations are possible within the scope of the claims.
Figure 1 shows an example of signals returned from an ALS as an aircraft approaches an airport to land.
Figure 2 is a graph showing heading error as a function of the number of ALS bars detected by the aircraft.

### DETAILED DESCRIPTION

As described in the background, above, aircraft are typically guided on approach and landing by an airport lighting system ALS comprising different lights (or light bars) located at different known points of the approach and landing runway and having a known size and spacing. Based on detection of the sequence of lights/bars, the aircraft can determine and control its heading for safe landing. The ALS can also be used to estimate altitude. In addition, or alternatively, aircraft may use other observed objects and, knowing their position or location, are able to estimate the aircraft heading based on such observations.

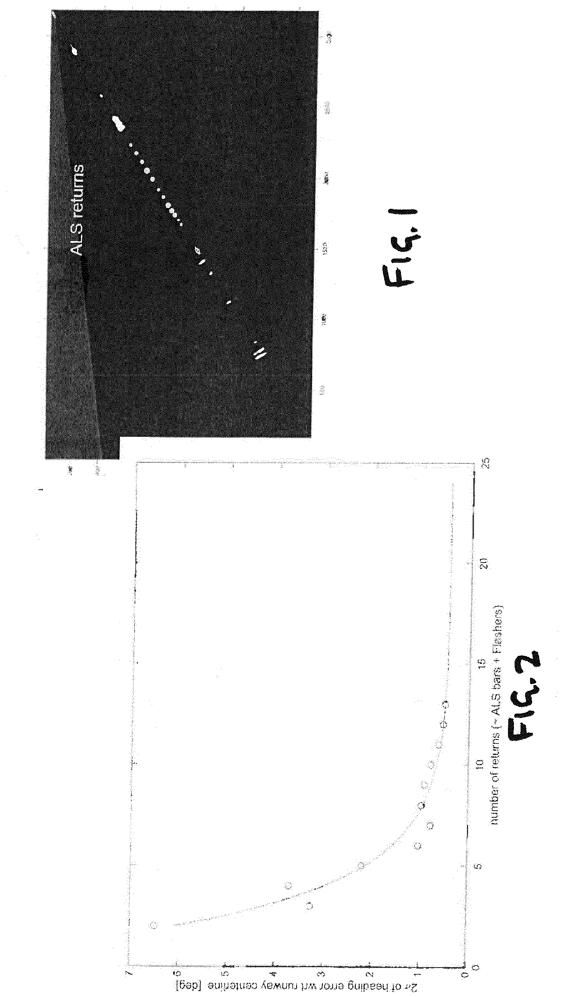

In some conditions, however, the aircraft might not detect all or sufficient lights of the ALS and/or sufficient known objects or features of such objects, to make a reliable estimation of its heading. Fig. 1, for example, shows what parts of the ALS might be detected by an aircraft in a given visibility - which are not all of the ALS light bars. In poor visibility, the aircraft might only `see' some ALS vars or lights, or may only see partial bars and so underestimate their size, or might wrongly identify objects due to not seeing their entire shape or size or features.

The graph of Fig. 2 shows that for a lower number of 'returns' i.e. detection of fewer ALS lights or bars, the likelihood of error in estimating the aircraft heading increases exponentially.

The techniques of this disclosure allow for improved accuracy in estimating the aircraft heading on approach even in low visibility conditions where, when further away from the airport, fewer ALS lights or known objects are visually detected, but the heading estimation is updated incrementally as the aircraft gets closer to the airport based on objects observed or detected by a vision system of the aircraft.

The technique of this disclosure makes use of long-range sensors such as radars located on aircraft. As mentioned above, the aircraft needs to use such sensors because it needs to be able to detect objects a great distance away due to the aircraft high speeds. Whilst such sensors can penetrate the atmosphere and so visually detect objects a great distance away, they do not provide high resolution images of what they have detected.

The heading estimation technique uses the visually detected images from these long-range sensors as the aircraft approaches. Initially, the images from the sensors will be very unclear, low resolution images and will not provide sufficient information for heading estimation. As the aircraft gets closer to the ground, the sensors will obtain more information from the objects in its range and will provide greater resolution. From this information, a processor can compare the images with features that have been saved and/or learned as features that might be expected to be present in the viewing range of the system, or features of objects that would be expected in the viewing range, and can use the additional information to estimate and incrementally improve estimation of the aircraft heading.

Using the example of an ALS, initially, when far from the airport, the sensor will only detect light but will not provide sufficient resolution of the detected image to be able to identify the shape, size or spacing of the light sources. An initial estimation of the heading can be made based on expected ALS patterns in the sensor range. The sensor processor can perform image processing using the obtained information e.g. by connecting lines between centroids of detected fuzzy light points and/or performing best-fit processing based on expected images to provide an estimate of the heading.

As the aircraft approaches the ground, the sensor returns higher resolution images which provide more information of the detected objects and, again, this information, together with information about objects that the system might expect to observe, can be processed and the heading estimation can be adjusted incrementally as more information is detected from the objects 'seen' by the sensor.

The 'expected' patterns may be known ALS light arrangements and/or may be other objects e.g. buildings or features of terrain.

The system may have stored or pre-programmed or learned 'expected' ALS patterns and/or objects with which the actual detected images can be compared.

With an initial 'coarse' image detection, an estimate can be generated on the aircraft heading by image processing as suggested above, e.g. extrapolation, joining centers, completing lines or shapes based on what, with reference to the 'expected' patterns or objects, are realistic expectations for what is actually present in the viewing region. The estimate is incrementally updated so that as the aircraft gets closer to the ground, and produces more clear/sharper images, a correction can be made to the processed image on the basis of which the heading is estimated.

In this way, the aircraft system does not need to wait until the ALS/objects can be clearly observed before making a heading estimation - the header estimation begins while the aircraft is still some distance away from landing and whilst only unclear images are being generated from the sensor. The estimated heading then becomes more accurate and/or can be corrected as more image information is obtained.

By using additional visual information and expected information to incrementally adjust the estimated heading, approach and landing operations in low visibility conditions can be successfully completed more often.

## Claims

1. An aircraft heading estimation system comprising:
one or more sensors arranged on the aircraft to detect features in a viewing region and provide feature signals indicative of the detected features;
an image processor storing predetermined image information of one or more expected features, being features that might be expected to be present in the viewing region,
the image processor configured to compare the features indicated by the feature signals with the one or more expected features to generate an estimated observed image and to derive an estimated heading for the aircraft based on the estimate observed image; wherein the image processor is further configured to incrementally update the estimated observed image with new feature signals generated by the sensors as their distance to the viewing region changes, and to incrementally updated the estimated heading based on the updated estimate observed image.

2. The system of claim 1, wherein the one or more sensors comprise one or more long-range sensors.

3. The system of claim 1 or 2, wherein the features comprise one or more lights from an aircraft landing system, ALS.

4. The system of any preceding claim, wherein the features comprises one or more objects.

5. The system of claim 4, wherein the one or more objects include a building, a vehicle or a feature of terrain.

6. The system of any preceding claim, wherein the image processor uses a process of connecting lines between centroids of detected fuzzy light points to generate the estimated observed image.

7. The system of any preceding claim, wherein the image processor uses a best-fit process to generate the estimated observed image.

8. The system of any preceding claim, wherein the image information comprises learned information.

9. The system of any preceding claim, wherein the image information comprises stored information.

10. The system of any preceding claim, wherein the image information comprises pre-programmed information.

11. The system of any preceding claim, wherein the image information comprises map information.

12. A method of estimating an aircraft heading, comprising:
detecting, by one or more sensors arranged on an aircraft, features in a viewing region and providing feature signals indicative of the detected features;
comparing, in an image processor, the features indicated by the feature signals with one or more expected features, being features that might be expected to be present in the viewing region, to generate an estimated observed image;
deriving an estimated heading for the aircraft based on the estimate observed image; and
incrementally updating the estimated observed image with new feature signals generated by the sensors as their distance to the viewing region changes, and incrementally updating the estimated heading based on the updated estimate observed image.
